Europäisches Patentamt

European Patent Office

Office européen des brevets

(11) Publication number: **0 432 916 A2**

# EUROPEAN PATENT APPLICATION

(21) Application number: 90312570.6

(51) Int. Cl.⁵: **B29C 49/06**, B29C 49/32

(22) Date of filing: **19.11.90**

(30) Priority: 20.11.89 US 439259
23.01.90 US 468683

(43) Date of publication of application:
**19.06.91 Bulletin 91/25**

(84) Designated Contracting States:
**AT BE CH DE DK ES FR GB GR IT LI LU NL SE**

(71) Applicant: **AEROSOL RESEARCH COMPANY (GREAT BRITAIN) LIMITED**
**Ixworth House, 37 Ixworth Place**
**Chelsea, London SW3 3QH(GB)**

(72) Inventor: **Randall, Julian K.**
**2223 Walnut Lane**
**Indiana, Evansville 47715(US)**
Inventor: **Luker, Edward**
**5812 Twickingham Court**
**Indiana, Evansville 47711(US)**

(74) Representative: **Duncan, Angus Henry et al**
**Barker, Brettell & Duncan 138 Hagley Road**
**Edgbaston Birmingham, B16 9PW(GB)**

(54) Injection-blow moulding apparatus.

(57) In an injection-blow moulding machine for producing containers with necks from plastics material, the machine being of the kind in which cores move alternately between injection moulds on which a parison is formed and blow moulds in which the parison, carried on the core, is expanded to form the container, and including neck moulds for forming a screw thread or other formation on the neck in the injection step, both the injection moulds (22) and the blow moulds (20) are of unsplit form, and there are neck forming sleeves and shoulder forming sleeves concentrically one within the other. The neck forming sleeve (32) may be rotatable to release the neck, in which case it is unsplit. The shoulder forming sleeve (30) is also unsplit. The neck forming sleeve (140) may be split into sectors. It always moves with the parison. The shoulder forming sleeve (30') may remain aligned with the blow mould.

IFig-2

# INJECTION-BLOW MOULDING APPARATUS

This invention relates to apparatus for moulding containers, and more particularly to apparatus for injection-blow moulding plastics containers having restricted necks.

A container with a restricted neck is defined as a container having a larger body and a smaller neck portion terminating in the container opening through which the contents of the container are dispensed. A shoulder performs the transition between the large body portion and the smaller neck portion.

Containers with restricted necks are commonly produced in injection-blow moulding machines where the neck is formed on a pre-form or parison in an injection mould and the finished container with its intermediate shoulder is formed in a blow mould. The parison is formed around a core in the injection mould, and the core carries the parison to the blow mould. Typically, both the injection mould and the blow mould open radially for introduction of the cores to the moulds and for removal of the parison with its formed neck from the injection mould and the finished container from the blow mould.

In some instances, a separate neck mould is used; for example, when more accurate screw threads are desired on the container neck finish, the use of a separate neck mould allows the parison to be transferred on the core with the neck mould to the blow mould station. This generally produces a better thread than one formed in an injection mould which may be unsupported or put into a slightly different-sized mould cavity in the blow mould to account for temperature differences and the like. With a separate neck mould, the injection mould can be one piece, that is to say, the mould does not have to open radially if the core is reciprocated into and out of the mould. However, the blow moulds still normally open radially to permit ejection of the finished container.

An aim of the present invention is to optimise moulding machine space or to the arrangement of the injection and blow mould cavities with minimum spacing so that a maximum number of parts may be moulded at a given time in a given confined space. For example, this invention contemplates an arrangement capable of moulding 36 finished containers or more in one moulding cycle. Thirty six containers can be produced in an arrangement employing 36 blow moulds and 36 injection moulds with 72 cores. Parisons formed on the cores in the injection moulds are moved into the blow moulds for blowing the finished containers while the cores from which finished containers have been removed are moved into the injection moulds to form new parisons.

Examples of injection-blow moulding machines having multiple arrays of cavities of this kind are shown in British Patent Specifications Nos. 1 183 327 and 1 308 781 of Cope Allman International Limited and US -P 3 183 552 of Francis Farkas and 3 776 991 and 3 990 826 of Paul Marcus.

A great amount of space is required for radially opening the injection moulds and the blow moulds. The present invention utilises one-piece moulds or injection and blow moulds which are circumferentially continuous and open axially at one end. The elimination of radial mould opening not only permits optimum spacing between adjacent mould cavities, but it allows heat transfer to the mould cavities to be optimised. In radially opening moulds, the heat transfer tubes must be arranged perpendicular to the axes of the moulds, which necessarily causes uneven heating or cooling. With circumferentially continuous or one-piece moulds, the heat transfer passages can be made concentric with the axes of the cores so as to provide a uniform temperature to the parisons and uniform cooling of the blow-moulded container. This provides a more uniform product while also reducing cycle time.

Unsplit blow moulds have been proposed in British Patent Specification No. 1 174 835 of Cope Allman International Limited and also in a later (but abandoned) British Patent Application No. 2 149 341A of Aoki.

According to the invention there is proposed a injection-blow moulding apparatus for forming containers having restricted necks comprising at least one injection mould for forming a parison and at least one blow mould for forming a finished container by expanding the parison in a blowing step, and at least one core adapted to co-operate with the injection mould and then with the blow mould, and means for causing the core to enter first the injection mould and then, with the injection-moulded parison on it, the blow mould, the apparatus further comprising a neck mould assembly adapted to co-operate with the root of the core to mould a neck formation on the parison, at least a part of the neck mould assembly remaining with the core and enclosing the neck of the parison as the parison is transferred to the blow mould, and only releasing the parison when the parison has been blown to form a container, and furthermore both the injection mould and the blow mould being circumferentially continuous, that is to say, unsplit, characterised in that

the neck mould assembly comprises both a neck forming sleeve and a shoulder forming sleeve the latter being concentric with the neck forming sleeve, at least during the blowing step, and being adapted to form a shoulder portion of the container, the neck forming sleeve or the shoulder forming sleeve making circumferential sealing engagement with the injection mould during the parison-forming step and the shoulder forming sleeve making circumferential sealing engagement with the blow mould during the blowing step.

Preferably, the moulds remain stationary with the injection equipment of the machine, and the cores with their surrounding sleeves are caused to reciprocate into and out of the moulds. The lateral movement or movement transverse to the axes of the moulds and cores is accomplished by moving the cores to transfer each core alternately between alignment with an injection mould and alignment with a blow mould.

Instead of using linear movements, optimisation of the cavity density can be accomplished in a like manner in a rotary injection-blow moulding machine, in which, for example, the cores with their associated concentrically located neck forming sleeves are rotated in one direction to move alternately into alignment with injection and blow moulds arranged in an annular array to receive the cores by axial movement into the moulds. Such axial movement brings the neck-forming sleeves into sealing engagement with the moulds, closing them for injection of parisons in the injection moulds and blowing finished containers in the blow moulds and blowing finished containers in the blow moulds. It will be appreciated that with a rotary array there will be an equal number of alternately arranged blow moulds and injection moulds, and there can be a number of spaced arrays arranged around the axis of rotation of the cores.

The shoulder of the container can be formed by part of a combined neck and shoulder forming sleeve. The neck and shoulder forming sleeves can be configured to form a neck with closure attachment means on the parison in the injection mould. The closure attachment means can take the form of screw threads on the container neck, and the apparatus can be configured so that the neck forming sleeve is unscrewed from the neck of the blow-moulded container during ejection of the container.

In a preferred form, each of the neck and shoulder forming sleeves has an inner annular clamping surface which is clamped against the injection mould when the core and sleeve is in its operative position relative to the injection mould and the sleeve has an outer annular clamping surface which is clamped against one of the blow moulds when the core and sleeve is in its operative position relative to the blow mould.

In another preferred embodiment, the neck and shoulder forming sleeve is configured to form a neck with closure attachment means and an outside container shoulder portion on the parison in the injection mould and the container is blown with this outside shoulder portion acting as a moulding surface when the container is being formed in the blow mould. In this case where an outside shoulder portion is formed in the injection mould, a single annular clamping surface on the neck and shoulder forming sleeve clamps against the injection mould in the injection stage and clamps against the blow mould in the blowing stage.

The neck and shoulder forming sleeve assembly preferably comprises two elements, a neck forming sleeve which is concentrically located around the core, and a separate shoulder forming sleeve which is concentrically located around the neck forming sleeve.

In one embodiment each of the neck forming sleeves has an annular clamping surface which is clamped against the injection mould when the core and sleeves are in their operative position relative to the injection mould, and each of the shoulder forming sleeves has an annular clamping surface which is clamped against the blow mould when the core and the sleeves are in their operative position relative to the blow mould.

In the embodiment where an outside shoulder portion is formed in the injection mould, the shoulder forming sleeve has a single annular clamping surface which is clamped against the injection mould when the core and sleeves are in their operative position relative to the injection mould and is clamped against the blow mould when the core and sleeves are in their operative position relative to a blow mould.

The separate neck forming sleeves and shoulder forming sleeves can be configured to mould a container neck with closure attachment means and radially offset structure between the neck forming sleeve and the shoulder forming sleeve. This can take the form of an externally screw-threaded neck with the radially offset structure being a child-resistant locking stop or a tamper-indicating frangible web structure. Similarly, the attachment means and radially offset structure can be in the form of a central pouring spout with a concentric internally threaded neck forming a drain-back type of container.

The shoulder forming sleeve will be circumferentially continuous so that no axial parting line will appear on the shoulder of the container. The shoulder forming sleeve also acts as an ejector element in ejecting the finished container off the core after the container has been removed from the blow mould.

In most instances, the neck forming sleeve would be circumferentially continuous. This permits the closure attachment means to be formed as accurate external threads without axial parting lines. However, with a circumferentially continuous sleeve, an unscrewing mechanism must be incorporated in the machine, as set forth in one of the preferred embodiments.

In other instances, the neck forming sleeve can include two or more contiguous annular sectors so that during the ejection stage, the sectors can be radially opened to release the closure attachment means. Multiple sector structure can be used when the closure attachment means is being formed as a circumferential snap bead which co-operates with a similar bead on a closure, or where less precise threads can be used. Preferably at least three or four sectors are used to minimise the amount of opening necessary to release the sleeve from the neck of the container.

The preferred embodiments of the invention are illustrated in the drawings, in which:-

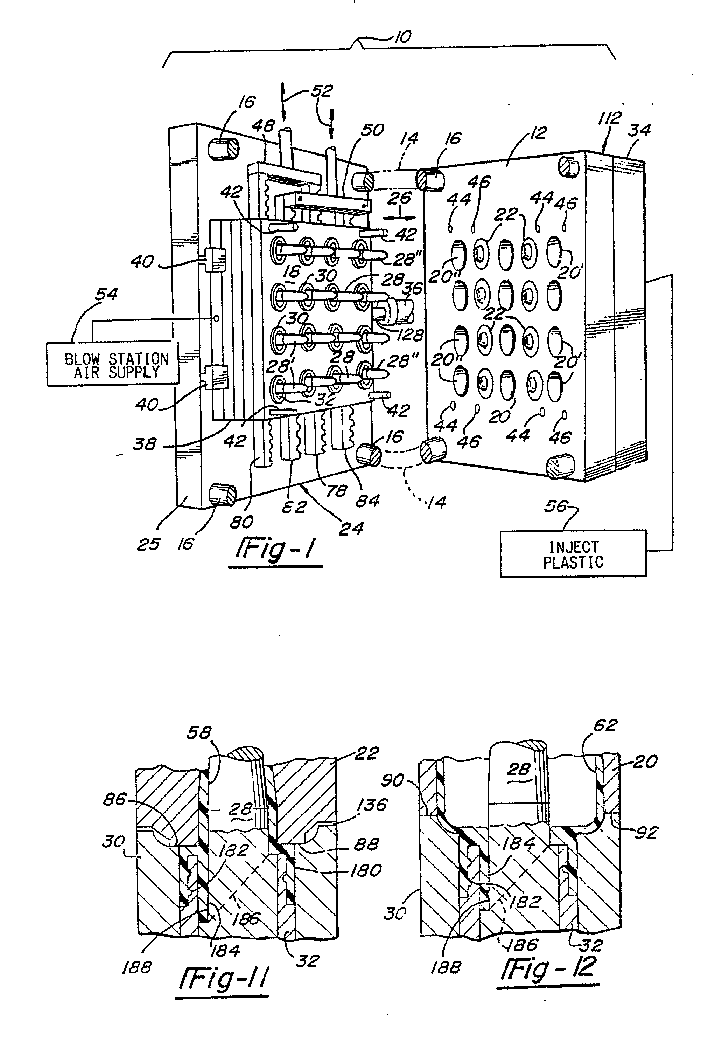

Figure 1 is a perspective view of the injection-blow moulding apparatus of this invention with the normally vertically orientated mould cavity plate and associated runner plate being swung open, for illustration only, relative to a normally vertically orientated core mounting plate and associated neck forming sleeve mounting and operating plates to reveal the operative relationship of the moulding components of the machine exemplified by four vertically spaced horizontal rows of five mould cavities alternately containing one of three blow moulds and one of two injection moulds.

Figure 2 is a cross-sectional top view of the injection-blow moulding apparatus of this invention showing a horizontal row of mould cavities with the details of one injection and one blowing station with the moulds closed and the cores fully inserted into the moulds with a shoulder forming sleeve or stripper plate in abutment with the mould cavity plate in position for injection moulding parisons and blow moulding finished containers;

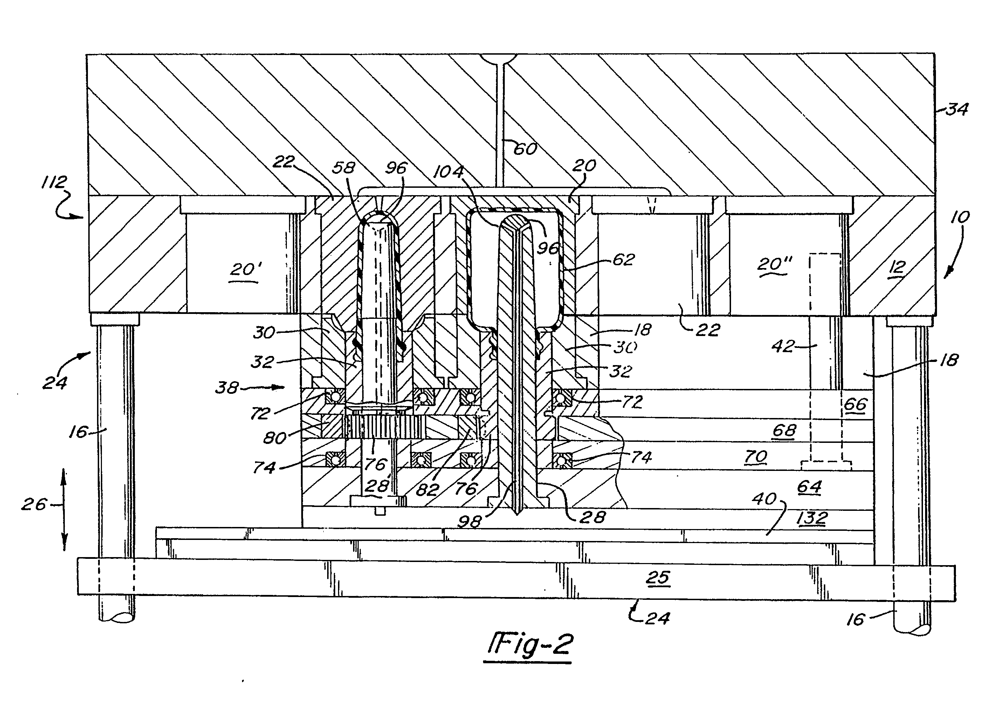

Figure 3 is a top view of the apparatus of the invention, similar to Figure 2, but omitting details and showing the apparatus in its fully open position with the formed parisons and blown containers having been stripped or removed from their respective mould cavities and being retained on their respective cores, partially within the stripper plate and neck forming sleeve plate;

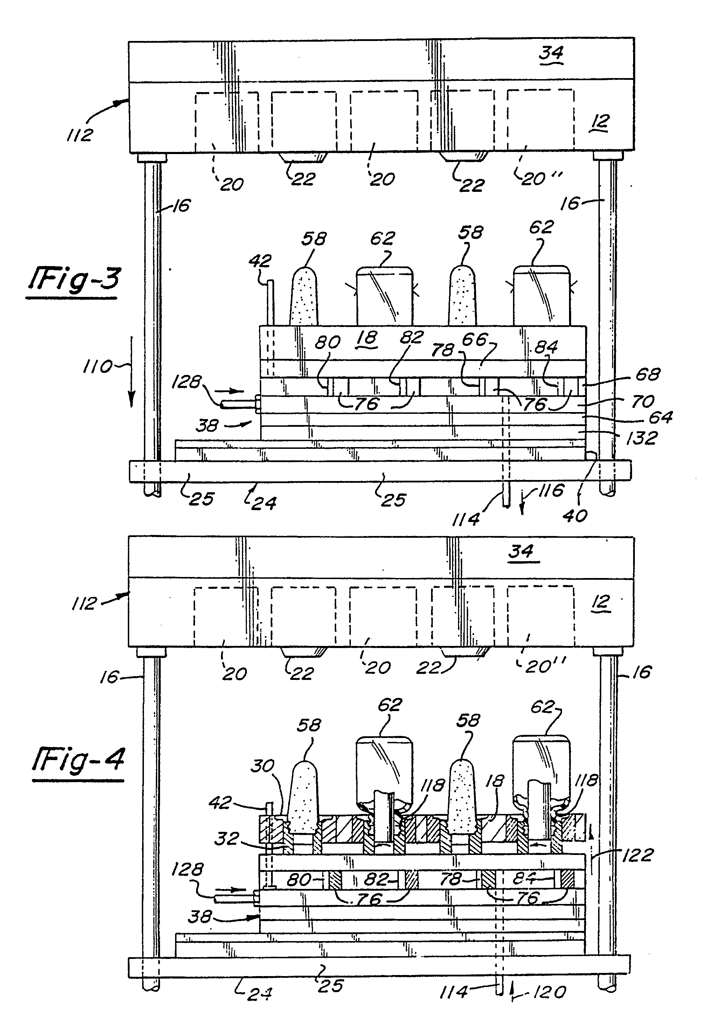

Figure 4 is a top view similar to Figure 3 but showing the necks of the blown containers being unscrewed from their respective neck forming sleeves with the containers advanced by the stripper plate a like amount towards the mould cavity plate; the stripper plate with the separate shoulder forming sleeves and the protruding portion of neck forming sleeves are shown in section along with a portion of the neck of the blown container for greater clarity;

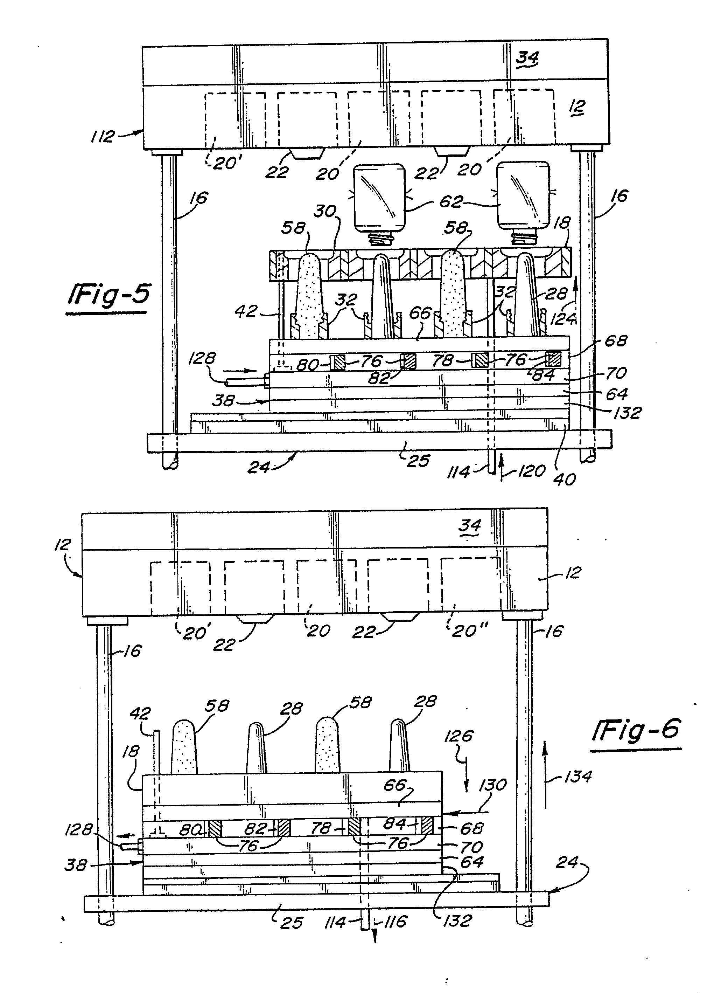

Figure 5 is a top view similar to Figures 3 and 4 showing the stripper plate advanced to its maximum extent toward the mould cavity plate after having stripped the blown containers entirely from their respective cores for free-fall ejection of the containers while the ends of the moulded parisons are protected by remaining in the shoulder forming sleeves in the stripper plate cavities;

Figure 6 is a top view similar to Figures 3-5 showing the stripper plate after having been returned to its initial position in contact with the first neck forming sleeve plate and with the cores and plates having been shuttled to the left so that the previously formed parisons will be introduced into blow moulds and the stripped cores will be introduced into injection moulds for the formation of new parisons upon the closing of the press to its moulding position as shown in Figure 2;

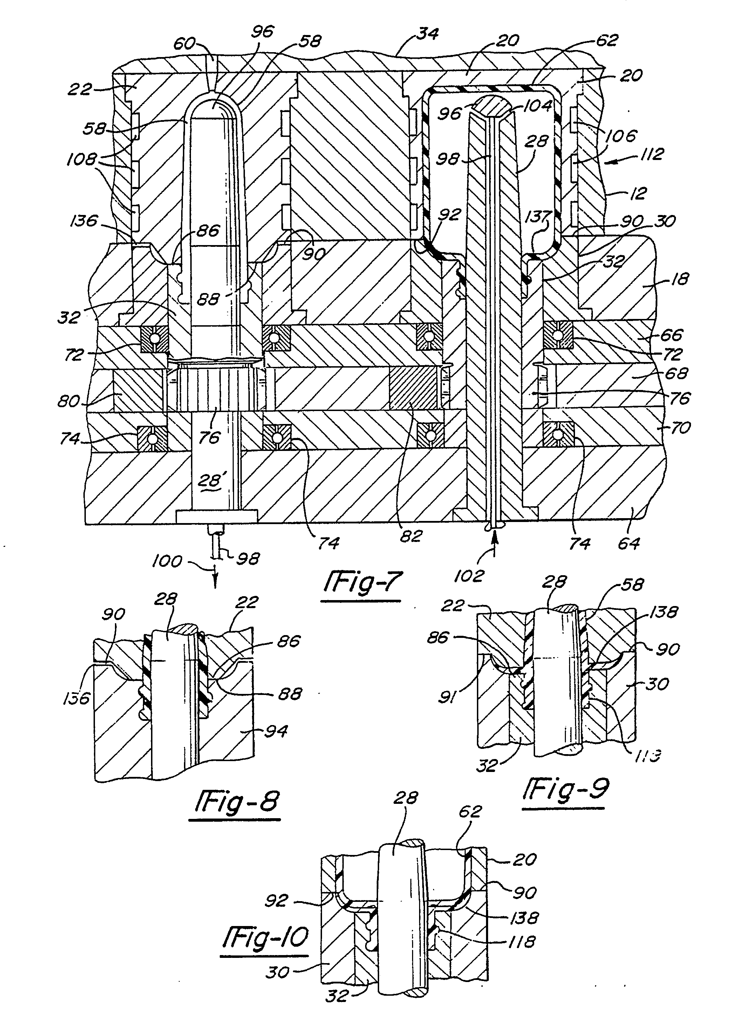

Figure 7 is a partial top cross-sectional view similar to Figure 2 but showing a single injection moulding station and adjacent blow moulding station on an enlarged scale and illustrating how the neck forming sleeve of this embodiment of the invention seals to the injection mould on an inner annular surface and how the shoulder forming sleeve seals to the blow mould on an outer annular surface, and further showing the container neck being moulded between the core and neck forming sleeve with external threads;

Figure 8 is a partial top cross-sectional view of the injection moulding station showing another embodiment of the invention in which a combined neck forming and shoulder forming sleeve is used with the sleeve sealing to the injection mould on an inner annular surface and further showing the container neck being moulded between the combined sleeve and the core with external screw threads;

Figure 9 is a partial top sectional view of another embodiment of the injection noulding station showing a neck forming sleeve concentrically located around the core and a separate shoulder forming sleeve concentrically located around the neck forming sleeve with the shoulder forming sleeve sealing to the injection mould on an outer annular surface and with the neck being formed between the core and neck forming sleeve with external threads and showing an outer shoulder portion being formed by cooperation between the faces of the neck forming sleeve and the shoulder forming sleeve with the injection mould;

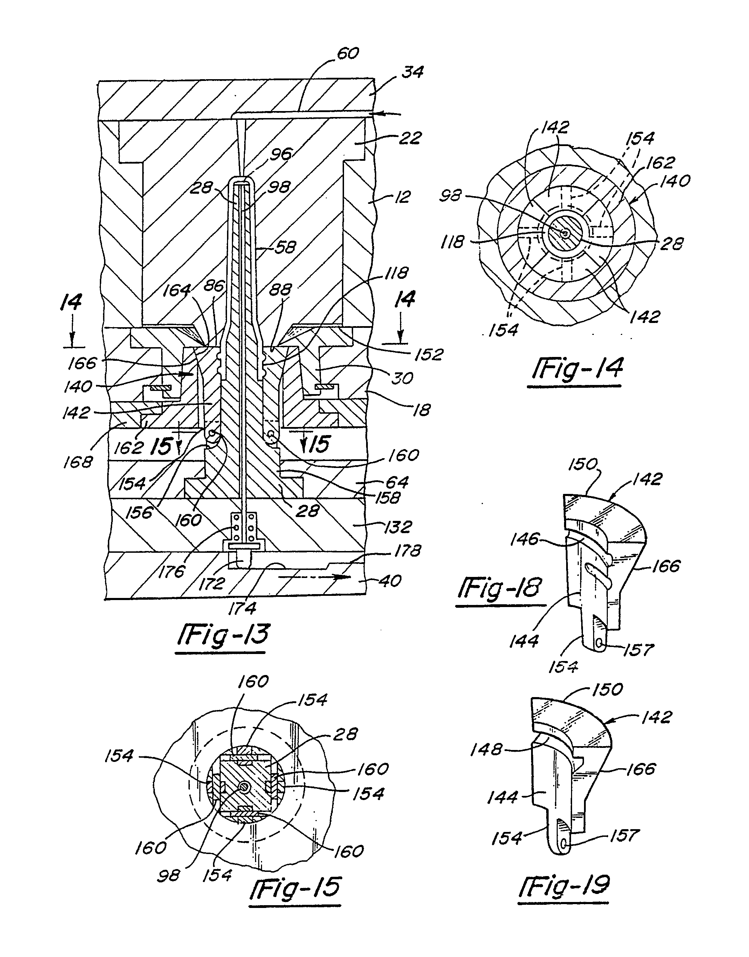

Figure 10 is a partial top sectional view of a blow mould showing the formation of a container shoulder with the outside shoulder portion formed in the injection mould of Figure 9 and showing the shoulder forming sleeve sealing to the blow mould on the same outer annular surface;

Figure 11 is a partial top section view of an injection mould showing the use of a separate neck forming sleeve and shoulder forming sleeve configured to mould a container neck with closure attachment means and a radially offset structure in the form of a drain-back neck configuration with a central pouring spout and internal neck threads;

Figure 12 is a partial top sectional view of a blow mould showing the completion of the container with its shoulder from the parison formed in the injection mould shown in Figure 11.

Figure 13 is a partial top cross-sectional view similar to Figure 7 but showing only a single injection moulding station on an enlarged scale to illustrate another embodiment of the invention in which the neck forming sleeve includes four annular sectors which are arranged to move radially outwards when the finished container is being made ready for ejection;

Figure 14 is a cross-sectional view taken along line 14-14 in Figure 13;

Figure 15 is a cross-sectional view taken along line 15-15 of Figure 13;

Figure 16 is an enlarged view similar to Figure 7 and 13 of the embodiment of the invention of Figure 13 showing only a single blow moulding station and the co-operation of the multiple component neck forming sleeve and the circumferentially continuous shoulder forming sleeve with a blow mould.

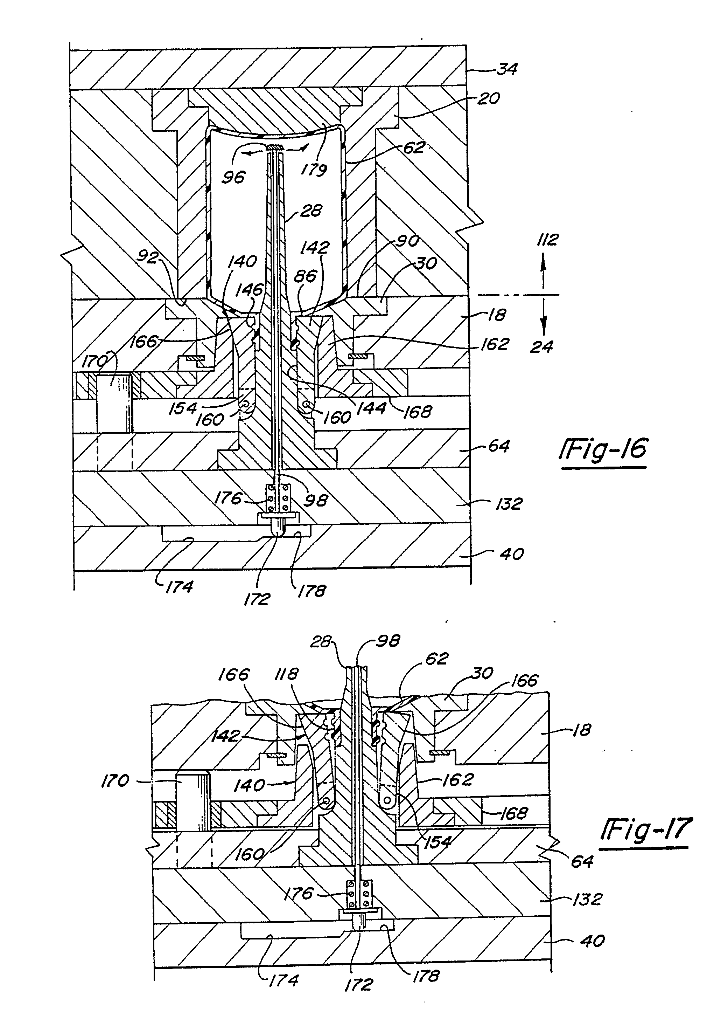

Figure 17 is a partial top cross-sectional view similar to Figure 16 showing the embodiments of Figure 13-15 with the annular sectors in their open position to allow ejection of the completed blow-moulded container;

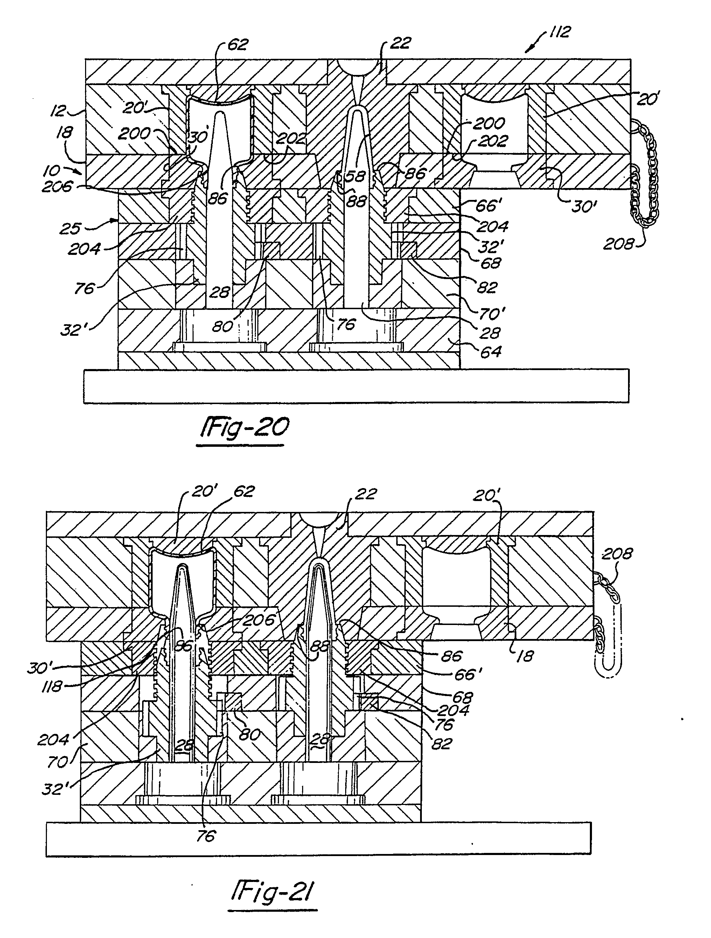

Figure 18 is a perspective view of one of the four annular sectors or jaws of the neck forming sleeve of the invention shown in Figures 13-17 for forming a closure attachment means as a helical thread; and

Figure 19 is a perspective view similar to Figure 18 showing another embodiment of the invention utilising four jaw members as part of the neck forming sleeve to form a snap bead closure attachment means on the neck of a container.

Figures 20-24 show the various stages of operation of another die set of this invention similar to the stages shown in Figures 2-6; in this embodiment the shoulder forming sleeves do not shuttle with the cores and neck forming sleeves between injection moulds and blow moulds; the shoulder forming sleeves remain in the stripper plate, acting individually as the shoulder forming portion of the blow mould which remains axially aligned with the body forming portion of the blow mould for relative axial movement in opening and closing the blow mould; only three mould cavities are illustrated, a central injection mould cavity flanked by blow mould cavities;

Figure 20 is a cross-sectional top view showing the moulds closed with the stripper plate in abutment with the mould cavity plate; the shoulder forming portion of the blow mould in the stripper plate is in sealing contact with the body portion of the left-hand blow mould, and the cores are fully inserted into the left hand blow mould and central injection mould with the neck forming sleeves surrounding the cores and in sealing relationship with the moulds for injection moulding a parison and blow moulding a finished container;

Figure 21 is a cross-sectional top view similar to Figure 20 but showing the neck ring unscrewed from the neck of the container blown in the left hand blow mould;

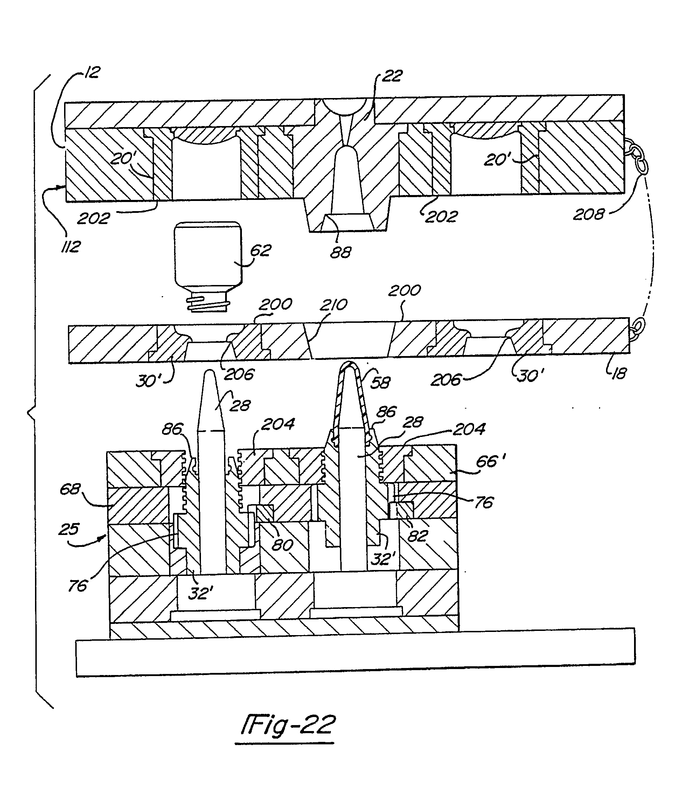

Figure 22 is a cross-sectional top view similar to Figures 20 and 21 but showing the injection-blow moulding apparatus in its fully opened position with the stripper plate moved away from the mould cavity plate and the formed parison and blown container having been stripped or removed from their respective mould cavities; the container is shown stripped from its core and in its free-fall ejection position while the moulded parison remains on its core in its neck forming sleeve or ring behind the stripper plate;

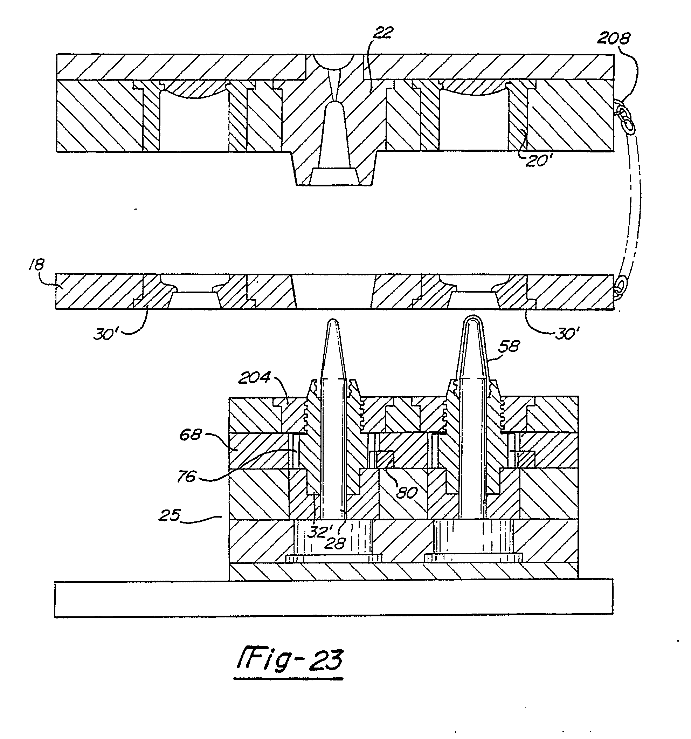

Figure 23 is a cross-sectional top view similar to Figure 22 showing the injection-blow moulding apparatus in its fully opened position after ejection of the blow container with the cores and plates having been shuttled to the right so that the previously formed parison is in line with the right-hand blow mould and the stripped core is in line with the injection mould;

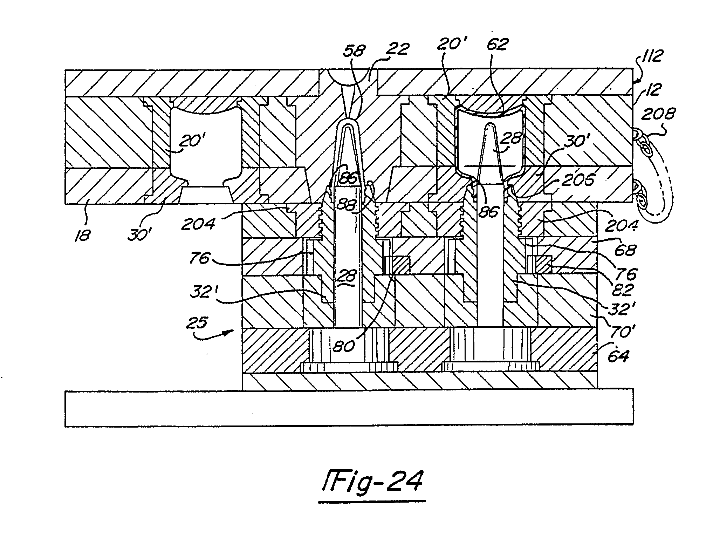

Figure 24 is a cross-sectional top view similar to Figure 20 with the moulds closed and a parison being formed in the injection mould while the previously formed parison is being blown into a finished container in the right-hand blow mould.

Referring to Figure 1, the injection-blow moulding apparatus 10 of the invention is shown in perspective with its mould cavity plate 12 swung open along lines 14 of guide posts 16 to show some of the details of the mould cavities and cores, sometimes referred to as core pins or core rods, and sleeves projecting from stripper plate 18 which in its normal position is parallel to and opposing the mould cavity plate 12. The mould cavity plate 12 is shown for illustration purposes as having four vertically spaced horizontal rows of five mould cavities in each row. Each horizontal row contains a blow mould 20 at each end with injection moulds 22 being located between an end blow mould 20 and central blow mould 20. The movable core and sleeve plate assembly or, simply, the movable platen assembly 24 is vertically aligned with the mould cavity plate 12 so that when the platen assembly 24 is reciprocated in the direction of arrow 26 on guide posts 16, the cores 28 will move into and out of aligned blow mould cavities 20 and injection mould cavities 22. As the platen assembly 24 is moved toward the cavity plate 12, the faces of shoulder forming sleeves 30 and the faces of neck forming sleeves 32 will seal against the respective blow moulds 20 and injection moulds 22, as will be more fully explained, so that the moulding portion of a machine cycle can be commenced.

The embodiments of the injection-blow moulding apparatus 10 of the invention which are illustrated include the die set in which the cavity plate 12 and a runner plate 34 comprise the stationary plate or platen assembly 112 mounted on the stationary platen of the injection-blow moulding machine. The core and sleeve plate assembly 24 or movable platen assembly 24 constitutes the moving portion of the die set which would be mounted on a reciprocating platen by means of the mounting plate 25 to move the assembly towards and away from the stationary cavity plate on guideposts 16. The movable assembly 24 has various components causing movements and other functions. For example, a hydraulic cylinder 36 performs a transverse shuttling motion for movement of plate assembly 38 along ways 40 to position the core alternately between the blow moulds 20 and the injection moulds 22. The stripper plate 18 is caused to move independently of the rest of the plates, of plate assembly 38, towards and away from the cavity plate 12 along guide rods 42 as shown in Figures 3-6 to perform a stripping or ejecting function for the finished containers, as will be more specifically explained. Guide rods 42 alternately engage sockets 44 or 46 in cavity plate 12 depending upon the position of the shuttling plate assembly 38 as end row cores 28′ engage blow moulds 20′ or end row cores 28″ engage end row blow moulds 20″. When the containers are being formed with a threaded neck, one of alternate rack assemblies 48 and 50 is reciprocated in the direction of arrows 52 to effect rotation and unscrewing of the neck forming sleeves 32 associated with the finished blown containers 62.

Blowing air and molten plastics material are supplied to the injection-blow moulding apparatus 10 from sources 54 and 56 in a manner conventional in moulding machines.

Referring to Figures 2 and 7, the injection-blow moulding apparatus 10 is shown with the die set in its closed position in which parisons 58 are being formed in the injection moulds 22 by plastics material supplied from source 56 in Figure 1 through a sprue system 60 in the runner plate 34. At the same time, finished containers 62 are being blow moulded in blow moulds 20 by air supplied from source 54 in Figure 1 to each of the blow moulds 20. The details of only one injection mould 22 and one blow mould 20 are shown in Figure 2, and these stations have been enlarged in Figure 7 to show the detail. Figure 2 shows the plate assembly 38 shuttled to the right on ways 40 so the containers 62 are being blown in the end vertical row of blow moulds 20″ and parisons are being formed in the other vertical row of ejection moulds 22, while the other vertical row of blow moulds 20′ is not being used in this cycle.

In addition to the stripper plate 18 which carries the shoulder forming sleeves 30, the plate assembly 38 of the moving platen assembly 24 includes a core plate 64 holding the cores 28 and three neck forming sleeve plates 66, 68 and 70 in the embodiments of the invention shown in Figures 1-7.

A forward support plate 66 carries roller bearings 72 and a rearward support plate 70 carries roller bearings 74 which support the neck forming sleeves 32 for rotation which is imparted through pinions 76, which are an integral part of the neck forming sleeves 32, through the movement of alternately actuated rack assemblies 48 and 50. In the position shown in Figures 1 and 2 the rack assembly 50 would be moved downwards, moving the individual racks 82 and 84 to unscrew the neck forming sleeves 32 from the blown containers 62 in the vertical row of blow moulds 20 and a like row of containers 62 which have been formed in the end vertical row of blow moulds 20″; see Figure 7 also. Similarly, when the plate assembly 38 has been shifted to the left so that containers 62 are being blow moulded in the end row cavity 20′, the rack assembly 48 will be lowered to move individual racks 80 and 78 to unscrew the neck forming sleeves 32 from the blown finished containers 62 formed in this cycle of operation.

Referring to Figure 7, when the moving platen assembly 24 is moved into abutment with the stationary cavity plate 12 of the stationary platen assembly 112, an end face 86 of the neck forming sleeve seals against the opposed annular face 88 of injection mould 22. At the same time an end face 90 of shoulder forming sleeve 30 seals against the opposing annular end face 92 of the blow mould 20. When a single neck forming and shoulder forming sleeve 94 is used as shown in Figure 8, the annular sealing surface 86 is the inner annular sealing surface of the combined sleeve 94 for sealing against the sealing face 88 of the injection mould 22, and the outer annular surface 90 of the combined sleeve will seal against the annular sealing surface 92 of the blow mould when the core 28 and sleeve 94 are moved into alignment and abutment with the blow mould 20 in the same manner as shown with the dual sleeve arrangement of Figure 7.

Referring to Figure 7, a poppet valve 96 of core 28 is kept in its closed position when the core is in an injection mould 22 by a force on its operating stem 98 in the direction of arrow 100. During the blowing cycle, the operating stem 98 is moved in the direction of arrow 102 to open the poppet valve 96 to allow air to flow through a passage 104 from the source 54 of blow air as shown in Figure 1.

Since both the blow moulds 20 and the injection moulds 22 are circumferentially continuous or solid moulds, only opening axially at one end by the movement of the core and associate neck and shoulder forming sleeves, both of these moulds can be temperature-controlled by circular cooling passages 106 and 108 respectively. This allows very accurate and consistent control, both of the parison 58 by circulation of heat transfer fluid through the passages 108 and of the container 62 being blown in blow mould 20 by heat transfer fluid flowing in passages 106. The concentricity of the passages to the parison and the blow moulded container allows a much more accurate and consistent control than the conventional axial-type passages that must be used in injection and blow moulds that are radially opened.

Upon completion of the moulding cycle depicted in Figures 2 and 7 the injection-blow moulding machine and the apparatus of this invention is opened to its fullest extent by travel of its movable core and sleeve platen assembly 24 along guideposts 16 in the direction of arrow 110 away from the stationary platen assembly 112 which includes the cavity plate 12 as shown in Figure 3. This strips the injection moulded parisons 58 and the blow moulded containers 62 from their respective mould cavities 22 and 20, respectively retaining both of them within their respective shoulder forming sleeves 30 in stripper plate 18 and neck forming sleeves 32 in plates 66, 68 and 70 and on cores 28. The stripper plate 18 is held in contact with the forward bearing support plate 66 of plate assembly 38 by the locking or downward force of a pushrod 114 in the direction of arrow 116.

The next step in the moulding cycle, depicted in Figure 4, is accomplished with the die set remaining in its fully open position as in the previous step, by stripping the threaded necks 118 of the blown container 62 from neck forming sleeves 32 through actuation of the appropriate rack assembly 48 or 50, in the downward direction of arrow 52 in Figure 1, moving racks 78 and 80 or 82 and 84 respectively turning the pinions 76 on the neck forming sleeves 32. The sleeves 32 are rotated in an unscrewing direction while advancing the stripper plate 18 at the same rate as the lead of the screw by cam elements, not shown, associated with the racks or alternatively by advance of the pushrod 114 in the direction of arrow 120 in Figure 4. The advance of the stripper plate 18 in the direction of arrow 112 causes a stripping movement, moving the necks of the containers forwards towards stationary platen assembly 112 on the respective cores 28. With the shuttling plate assembly 38 in the position shown in Figures 1, 2 and 4, the rack assembly 50 would be moved dcwnwards to move its associated racks 82 and 84, stripping the blown containers.

With the completion of the unscrewing of the container necks shown in Figure 4, the stripper plate 18 with its shoulder forming sleeves 30 is advanced to its fullest extent in the direction of arrow 124 as shown in Figure 5 by the extension of pushrod 114 in the direction of arrow 120 towards the stationary platen assembly 112, pushing the completed containers 62 completely off the cores 28 free from the shoulder forming sleeves 30 for free-fall ejection as shown. At the same time, the relatively soft parisons 58 are protected within their respective neck forming sleeves 30 from any contact with the ejected containers 62. The movement of the stripper plate 18 is along guide rods 42, as best seen in Figures 1 and 5.

Upon the completion of the ejection step shown in Figure 5, the stripper plate 18 is returned in the direction of arrow 126 in Figure 6 to its abutting position with the forward bearing support plate 66 by the movement of pushrod 114 in the direction of arrow 116. Next the plate assembly 38 is shifted or shuttled to the left as shown in Figure 6 by the action of cylinder 36, shown in Figure 1, and piston rod 128, shown in Figures 1 and 6, in the direction of arrow 130. The slide plate 132 moves along the ways 40 during this shuttling motion.

The plate assembly 38 is now in position for movement of the platen assembly 24 in a closing direction indicated by arrow 134 to commence another moulding cycle. During this next cycle, the previously formed parisons 58 would be inserted into blow moulds 20 with the leftmost vertical row of parisons 58 being inserted into the blow moulds 20′, leaving the blow moulds 20″ unused during this cycle. Also the guide rods 42 will line up with alternate cavities 46 upon closure of the die set to the moulding position of Figures 2 and 7.

Whether separate neck forming sleeves 32 and shoulder forming sleeves 30 are used as in the embodiment of Figures 1-6 or unitary neck and shoulder forming sleeves 94 are used as in the embodiment of Figure 8, the annular surface 86 on the sleeve or sleeves seals against the annular surface 88 of the injection mould while there is a gap between the annular surface 90 on the sleeve or sleeves and the injection mould 22. In the blow mould 20, the annular surface 90 seals against the annular surface 92 on the blow mould while the annular surface 86 on the sleeve or sleeves cooperates with shoulder forming sleeve 30 to form a portion 137 of the shoulder of the container; see Figure 7.

In the embodiment of Figure 9, which shows an injection moulding station, in addition to the closure attachment means which is shown as a threaded neck 118 being moulded on parison 58, an outside shoulder portion 138 is simultaneously moulded between the inner sealing face 86 at the end of the neck forming sleeve 32 and a portion of the shoulder forming sleeve 30 with the injection mould 22. In this embodiment a single annular sealing surface 90 on the shoulder forming sleeve 30 seals against an opposing annular surface 91 on the injection mould 22, and as shown in Figure 10, the same sealing surface 90 seals against a like opposing annular surface 92 on the blow mould 20. When the parison 58 with its outside shoulder portion 138 is introduced into the blow mould 20, the outside shoulder surface 138 acts as a moulding surface to form the completed shoulder of the container. This has the advantage of using a single sealing surface 90 on the shoulder forming sleeve 30 for sealing both to the injection mould 22 and the blow mould 20.

In Figures 11 and 12 a portion of the injection moulding station and blow moulding station respectively is shown utilising a neck forming sleeve 32 and shoulder forming sleeve 30 with the same sealing surfaces as shown in Figure 7 or the embodiments of Figures 1-7 but with the core and sleeves configured to mould a container neck with a closure attachment means and a radially offset structure in the form of a drain-back neck 180 formed between the shoulder forming sleeve 30 and the neck forming sleeve 32 with internal screw threads 182 formed by the neck forming sleeve 32 and a pouring spout 184 formed with an oblique opening 186 between a recess 188 in the core 28 and the neck forming sleeve 32.

In the embodiments of Figures 1-12, the separate neck forming sleeve and shoulder forming sleeve have both been constructed with a circumferentially continuous wall so that there are no mould marks or parting lines on the container shoulder or on the screw-threaded neck of the container. Also, the unitary neck and shoulder forming sleeve 94 of Figure 8 is circumferentially continuous. This requires the unscrewing of the neck forming sleeve by the rack and pinion mechanism shown in Figures 1, 2 and 7 unless a very shallow jump thread is acceptable for the part being moulded. In some instances it is either undesirable or impossible to unscrew the container neck. For example, if the closure attachment means takes the form of a snap bead, this is a continuous flange on the container neck which cannot be unscrewed. In other instances parting lines on the neck thread are acceptable so that in either instance a neck forming sleeve can take the form of a multiple element device or chuck having two or more annular sectors or jaws and a camming sleeve or structure which alternately keeps the jaws together in a contiguous moulding position or in a separated position in which the jaws move radially outwards to release the closure attachment means on the neck of the container.

Referring to Figures 13-19, the moulding apparatus of the invention includes a separate shoulder forming sleeve 30 and a separate neck forming sleeve 140 having four contiguous annular sectors or jaws 142 which form the neck with its closure attachment means when the jaws or sectors are in a closed position. The annular sectors or jaws are movable outwards for ejection of the container. Figure 13 shows this neck forming sleeve or four-jaw neck forming chuck in its closed moulding position with a portion of the end faces 150 of the individual jaw 142, see Figure 18, sealed at 86 against the injection mould 22 forming a parison 58 with a threaded neck 118. Figure 16 shows the neck forming chuck or sleeve 140 with its jaws 142 still being held in their closed contiguous relationship with a portion of the end faces 150 sealing to the blow mould and a portion forming a portion of the shoulder of the blow-moulded container 62. Figure 17 shows the neck forming chuck 140 in its open position with the jaws 142 pivoted to release the container neck. Figure 18 shows one of the four jaws or sectors 142 of the neck forming chuck 140. The inner cylindrical surface 144 forms the neck of the container with the groove 146 forming the screw threads on the container neck. Alternatively as shown in Figure 19 the closure attachment means can take the form of a snap bead formed by the groove 148.

Referring to Figure 13, the inner portion 86 of the radial face 150 acts as a sealing face 86 which seals against the annular sealing area 88 in the injection mould in the same manner as the seal effected by the neck forming sleeve 32 and injection mould 22 in Figure 7. A clearance space 152 is provided between the shoulder forming sleeve 30 and the injection mould 22 from the outer extremity of the sealing surface 86 on the jaw face 150. The lower end of the jaw 142 is formed with a tang 154 which fits within a recess 156 in the lower portion 158 of the core 28. The tang 154 has an aperture 157 close to its end to receive a pin 160 for pivotal by mounting of the jaws on the core, as best shown in Figure 15. A chuck retainer sleeve 162 surrounds the jaws 142 and has a tapered inner surface 164 at one end which co-operates with an outer tapered surface 166 on the jaws to retain the jaws in their closed contiguous position when the sleeve is in its forward position as shown in Figures 13 and 16, being held there by its associated actuating bar 168. The actuating bar 168 is movable from its closing position shown in Figures 13 and 16 to its opening position shown in Figure 17 on guide rods 170, one of which is shown in Figures 16 and 17.

Figure 16 shows the core 28, neck forming chuck 140 and shoulder forming sleeve 30 in operative position with blow mould 20. Sealing to the mould is effected between the outer annular surface 90 on the shoulder forming sleeve 30 and sealing face 92 of the blow mould. The shoulder of the container is formed against the inner surface 86 of the jaw faces 150 and the moulding surface of the shoulder forming sleeve 30. When the container 62 has been blown, the actuating bars 168 associated with the blow moulds are moved to a rearward position as shown in Figure 17 carrying the chuck retainer sleeves with them to release the jaws 142 for pivotal outward movement, releasing the threaded neck portion 118 of the finished container 62.

Also shown in Figures 13, 16 and 17 is the actuating mechanism for the core poppet valve 96. The valve operating stem 98 has a cam follower 172 at its free end which rides in the cam track 174 in plate 40. A spring 176 maintains the poppet valve 96 in its closed position in the injection mould 22 as shown in Figure 13. When the core is moved into the blow mould 20 as shown in Figure 16, the cam follower 172 rides against raised cam surface 178, opening the poppet valve 96 against the force of the spring 176 as shown in Figure 16 for admitting the blowing air into the parison to form the container 62.

Figure 16 shows the circumferentially continuous blow mould 20 sealed at its rearward end by a bottom-forming plug 178 for ease in manufacturing the mould.

Figures 20-24 illustrate another embodiment of the invention in which a novel die set according to the invention includes a stationary platen assembly 112 and a movable platen assembly 25 which are introduced into an injection-blow moulding machine to create a moulding machine In this embodiment the shoulder forming sleeve does not travel with the core as an integral part of the neck forming sleeve or as a separate sleeve surrounding the neck forming sleeve concentrically located around the core. That is to say, in this embodiment, the shoulder forming sleeves do not shuttle with the cores and neck forming sleeves between injection moulds and blow moulds but they remain in the stripper plate, acting individually as the shoulder forming portion of the blow mould which remains axially aligned with the body forming portion of the blow mould for relative axial movement in opening and closing the blow mould. Thus, the stripper plate does not shuttle with the moving platen assembly but only reciprocates relative to the mould cavity plate. Corresponding reference numerals have been used to indicate the same or equivalent elements of the previous embodiment, and certain of the repetitive details have been eliminated to show more clearly the details that are unique to this embodiment. Only a single central injection mould cavity and mould are shown, with a blow mould on each side of the injection mould. It should be understood that this is for ease in illustration, and the die set can contain a greater number of adjacent injection and blow moulds which can be arranged in a number of vertically spaced horizontal rows. It will also be understood that while Figures 20-24 shown the axes of the moulds and cores to be located in horizontal planes with the cavity plate and core plate extending in a vertical plane, the axes of the moulds and cores could be vertically aligned, with the cavity and core plates being located in horizontal planes. Also, as mentioned previously, a circular array of moulds and cores can be provided.

Referring to Figure 20, the injection-blow moulding apparatus 10 is shown with a die set in its closed position in which a parison 58 is formed in the injection mould 22 and a finished container 62 is blow moulded in the left-hand blow mould 20. The stripper plate 18 is in abutment with mould cavity plate 12 so that the annular face 200 of the shoulder forming sleeves or shoulder forming portions 30′ of the blow moulds are in sealing contact with the annular faces 202 of the body portion 20′ of the blow moulds. At the same time the neck forming sleeves 32′ are brought into sealing contact with both the injection mould 22 and the shoulder forming portion 30′ of the blow mould, having been screwed into neck mould 204 retained in support plate 66′. In this embodiment, the single annular sealing face 86 of the neck forming sleeve 32′ seals against the annular sealing surface 88 of the injection mould 22 and also seals against the annular sealing surface 206 on the shoulder forming sleeve or shoulder forming portion 30′ of the blow mould.

After the parison 58 has been formed in the injection mould 22 and the container 62 has been blown in the blow mould 20', 30', the neck forming sleeve 32 is then unscrewed from the threaded neck 118 of the container 62 blown in the left-hand blow mould and from its associated neck mould nut 204 by the vertical movement of rack 80 co-operating with the integral pinion 76 on the neck forming sleeve 32', as shown in Figure 21. Suitable rack assemblies such as assemblies 48 and 50 in Figure 1 are provided to unscrew the neck forming sleeve 32' from the blown container 62 while retaining the neck forming sleeve 32 with the parison 58 which has just been formed.

Upon completion of the unscrewing step shown in Figure 21 the machine is opened to its fullest extent of travel as shown in Figure 22, stripping the formed containers 62 from the body blow mould 20' and the parison 58 from the injection mould 22. The stripper plate 18 moves with the movable platen assembly 25 for a limited distance, being restrained by a tether device 208 or other suitable mechanism so that it will strip the blown container 62 from its core 28 as the core continues to move past the restrained stripper plate 18, freeing the blown container 62 from its neck forming blow mould or sleeve 30' for ejection from the apparatus by free fall. The injection moulded parison 58 remains with its core 28 and neck forming sleeve 32' passing through the aperture 210 in the stripper plate 18, having no shoulder forming blow mould 30'.

After the ejection cycle shown in Figure 22, the neck forming sleeve 32' from which the blown container 62 has just been ejected, is screwed back into its neck mould nut 204 by vertical movement of rack 80 in a reverse direction rotating the pinion 76 in a clockwise direction to perform this re-screwing operation. With the blow moulding machine and its die set remaining in its fully opened position, the movable platen 25 is shuttled to the right as depicted in Figure 23 to align the injection moulded parison 58 with the right-hand body blow mould 20' and shoulder blow mould 30' while aligning the core 28 which has just been stripped of a container with the centrally located injection mould 22.

Upon the completion of the shuttle step depicted in Figure 23, the platens and die set are again closed so that a new parison 58 can be formed in the injection mould 22 while a container 62 is blown in the right-hand blow mould 20', 30'.

It will be apparent from the foregoing description of this embodiment of the invention shown in Figures 20-24 that there will be fewer mould parts in that the shoulder forming sleeve remains associated with a body forming blow mould and there is no shoulder forming sleeve associated with the cores 28 when they are co-operating with the injection mould 22.

## Claims

1. Injection-blow moulding apparatus for forming containers having restricted necks comprising at least one injection mould (22) for forming a parison and at least one blow mould (20) for forming a finished container by expanding the parison in a blowing step, and at least one core (28) adapted to co-operate with the injection mould (22) and then with the blow mould (20), and means for causing the core to enter first the injection mould and then, with the injection-moulded parison on it, the blow mould, the apparatus further comprising a neck mould assembly adapted to co-operate with the root of the core to mould a neck formation on the parison, at least a part of the neck mould assembly remaining with the core and enclosing the neck of the parison as the parison is transferred to the blow mould, and only releasing the parison when the parison has been blown to form a container, and furthermore both the injection mould and the blow mould being circumferentially continuous, that is to say, unsplit, characterised in that the neck mould assembly comprises both a neck forming sleeve (32) and a shoulder forming sleeve (30) the latter being concentric with the neck forming sleeve, at least during the blowing step, and being adapted to form a shoulder portion of the container, the neck forming sleeve (32) or the shoulder forming sleeve (30) making circumferential sealing engagement (86, 88) with the injection mould during the parison-forming step and the shoulder forming sleeve making circumferential sealing engagement (90) with the blow mould during the blowing step.

2. Apparatus according to claim 1 in which the neck forming sleeve (32) and the shoulder forming sleeve (30) are separate concentric relatively movable circumferentially continuous components.

3. Apparatus according to claim 2 in which the neck forming sleeve (32) is adapted to form a helical formation on the neck of the parison and provided with means for rotating it to release the container after the blowing step, the shoulder forming sleeve remaining unrotated.

4. Apparatus according to claim 1 in which the neck forming sleeve (140) and shoulder forming sleeve (30) are separate concentric relatively movable components, the shoulder forming sleeve being circumferentially continuous whereas the neck forming sleeve (140) is made up of a number of sectors (142) which are movable apart to release the neck of the container after the blowing step.

5. Apparatus according to any one of claims 1 to 4 in which the shoulder forming sleeve (30) is adapted to move axially with respect to the core (28) after the blowing step to strip the finished container from the core (28).

6. Apparatus according to claim 5 as dependent upon claim 3 in which the stripping movement of the shoulder forming sleeve (30) is synchronised with the rotation of the neck forming sleeve (32).

7. Apparatus according to any one of claims 1 to 6 in which both the neck forming sleeve (32) and the shoulder forming sleeve (30) remain in contact with one another and around the parison as the parison is transferred from the injection mould (22) to the blow mould (20).

8. Apparatus according to any one of claims 1 to 6 in which the shoulder forming sleeve (30′) remains in alignment with the blow mould (20), only being engaged by the parison when the parison is transferred on the core, together with the neck forming sleeve, from the injection mould (22).

9. Apparatus according to claim 8 in which the shoulder forming sleeve (30′) is movable axially away from the blow mould (20) with the neck forming sleeve (32′) to allow withdrawal of the blown container from the blow mould by axial movement of the core and the neck forming sleeve.

10. Apparatus according to claim 9 in which the neck forming sleeve (32′) is circumferentially continuous and the neck of the parison to be formed includes a helical formation and the neck forming sleeve (32′) is rotatable about its axis to release the blown container after withdrawal from the blow mould (20).

Fig-1

BLOW STATION AIR SUPPLY

INJECT PLASTIC

Fig-11

Fig-12

Fig-2

_Fig-3_

_Fig-4_

*Fig-5*

*Fig-6*

*Fig-7*

*Fig-8*

*Fig-9*

*Fig-10*

*Fig-13*

*Fig-14*

*Fig-15*

*Fig-18*

*Fig-19*

_Fig-16_

_Fig-17_

_Fig-20_

_Fig-21_

*Fig-22*

_Fig-23_

*Fig-24*